# EUROPEAN PATENT SPECIFICATION

(11) **EP 2 047 560 B1**
(45) Date of publication and mention of the grant of the patent: **20.01.2010**
(21) Application number: 07709876.2
(22) Date of filing: 29.01.2007
(51) Int. Cl.: H01Q 1/24, H04M 1/02

(54) **SLIDER FORM FACTOR ELECTRONIC DEVICE WITH IMPROVED LOW BAND PERFORMANCE**
ELEKTRONISCHE SCHIEBERFORMFAKTOREINRICHTUNG MIT VERBESSERTER NIEDERBAND-LEISTUNGSFÄHIGKEIT
DISPOSITIF ÉLECTRONIQUE À FACTEUR DE FORME COULISSANTE AVEC DES PERFORMANCES DE BANDE BASSE OPTIMISÉES

(30) Priority: 28.07.2006 US 460684
(43) Date of publication of application: 15.04.2009
(73) Proprietor: Sony Ericsson Mobile Communications AB, 221 88 Lund (SE)
(72) Inventor: VANJANI, Kiran Chander, Morrisville, NC 27560 (US); OZKAR, Mete, Raleigh, NC 27613 (US)
(74) Representative: Andersson, Björn E.
(86) International application number: PCT/US2007/002427
(87) International publication number: WO 2008/013572

(56) References cited:
- EP-A- 1 672 736
- EP-A1- 1 324 425
- WO-A-00/03452
- US-B1- 7 012 571

## Description

### TECHNICAL FIELD OF THE INVENTION

The present invention relates generally to portable electronic devices such as mobile phones, and more particularly to portable electronic devices having an antenna for carrying out mobile communications.

### DESCRIPTION OF THE RELATED ART

Portable electronic devices such as mobile phones have been popular for years and yet only continue to increase in popularity. Traditionally, mobile phones had been used strictly for conventional voice communications. However, as technology has developed mobile phones are now capable not only of conventional voice communications, but also are capable of data communications, video transfer, media reproduction, commercial radio reception, etc. More and more, a user having a single electronic device is able to perform a variety of different functions.

As technology advances in the field of mobile phones and other electronic devices, the need for broadband data transmission and reception continues to increase. Consequently, the demands on the radio portion of the electronic device also increase. At the same time, however, there is a constant push for miniaturization of the electronic devices to satisfy the convenience and desires of consumers. The need for broader bandwidth coupled with reduced size creates problems insofar as providing an antenna in the electronic device that performs satisfactorily. Generally speaking, the smaller the size of the antenna, the lower the performance of the antenna at lower frequency bands (e.g., 850 MHz and 900 MHz).

In view of the aforementioned shortcomings associated with conventional electronic devices, there is a strong need in the art for an electronic device having an antenna configuration that provides both small size and good low band performance.

A prior art electronic device having upper and lower slider portions and upper and lower ground planes slidably connected is known from US 7012 571.

According to the invention, an electronic device is provided including a housing having an upper slider portion and a lower slider portion as set out in claim 1. The upper slider portion and the lower slider portion are slidably engaged to permit relative sliding motion therebetween along a sliding axis. The electronic device further includes an upper printed circuit board and upper ground plane housed within the upper slider portion, the upper printed circuit board having circuitry assembled thereon. In addition, the electronic device includes a lower printed circuit board and lower ground plane housed within the lower slider portion, the lower printed circuit board having additional circuitry assembled thereon. Furthermore, the electronic device includes at least one of a radio transmitter or receiver within the housing for transmitting/receiving communications via the electronic device, and an antenna housed within the lower slider portion generally laterally adjacent a first edge of the lower ground plane. An antenna feed point coupling the at least one of the radio transmitter or receiver to the antenna is located generally at the center of the first edge of the lower ground plane, and a ground connection electrically connects a second edge of the lower ground plane, adjacent the first edge, to an edge of the upper ground plane.

In accordance with another aspect of the invention, the lower ground plane comprises an electrically conductive sheet interposed between the lower printed circuit board and the upper printed circuit board.

According to still another aspect of the invention, the electrically conductive sheet comprises a pair of guide channels that engage opposite edges of the upper printed circuit board to provide the slidable engagement.

As for yet another aspect of the invention, one of the pair of guide channels serves as the ground connection.

According to yet another aspect of the invention, the upper ground plane comprises a metal layer of the upper printed circuit board.

In accordance with still another aspect of the invention, the ground connection comprises a slider button contact extending from the lower slider portion and engaging the upper ground plane in the upper slider portion.

In still another aspect of the invention, the lower printed circuit board occupies less than one-half a length of the lower slider portion along the sliding axis, and the electronic device further includes an electrically conductive sheet interposed between the lower printed circuit board and the upper printed circuit board, the electrically conductive sheet occupying more than half the length of the lower slider portion along the sliding axis.

According to another aspect of the invention, the antenna occupies a majority of a remainder of the length of the lower slider portion along the sliding axis not occupied by the electrically conductive sheet.

In accordance with still another aspect of the invention, the upper ground plane comprises a metal layer of the upper printed circuit board.

According to yet another aspect of the invention, the lower printed circuit board occupies at least half a length of the lower slider portion along the sliding axis, and the lower ground plane comprises a metal layer of the lower printed circuit board.

With still another aspect of the invention, the upper ground plane comprises a metal layer of the upper printed circuit board.

According to another aspect of the invention, the ground connection comprises a slider button contact extending from the lower slider portion and engaging the upper ground plane in the upper slider portion.

In accordance with another aspect of the invention, the antenna occupies a majority of a remainder of the length of the lower slider portion along the sliding axis not occupied by the lower printed circuit board.

With still another aspect of the invention, the antenna comprises a bent monopole antenna.

According to still another aspect of the invention, the antenna provides greater than 50% efficiency at approximately 850 MHz.

In accordance with another aspect of the invention, the antenna provides greater than 50% radiation efficiency at 850, 900, 1800, 1900 and 2100 MHz bands.

According to still another aspect of the invention, the at least one of the radio transmitter or receiver comprises a mobile phone transceiver and the electronic device functions as a mobile phone.

With another aspect of the invention, a liquid crystal display is housed within the upper slider portion and provided on the upper printed circuit board.

According to still another aspect, a battery is housed within the lower slider portion.

To the accomplishment of the foregoing and related ends, the invention, then, comprises the features hereinafter fully described and particularly pointed out in the claims. The following description and the annexed drawings set forth in detail certain illustrative embodiments of the invention. These embodiments are indicative, however, of but a few of the various ways in which the principles of the invention may be employed. Other objects, advantages and novel features of the invention will become apparent from the following detailed description of the invention when considered in conjunction with the drawings.

It should be emphasized that the term "comprises/comprising" when used in this specification is taken to specify the presence of stated features, integers, steps or components but does not preclude the presence or addition of one or more other features, integers, steps, components or groups thereof.

### BRIEF DESCRIPTION OF THE DRAWINGS

Fig. 1 illustrates an electronic device having a slider form factor, in the closed position, in accordance with an exemplary embodiment of the present invention;
Fig. 2 illustrates the electronic device with a slider form factor of Fig. 1 in the open position in accordance with the exemplary embodiment of the present invention;
Fig. 3 is a schematic side view of the electronic device in the closed position in accordance with a first particular embodiment of the present invention;
Fig. 4 is a schematic side view of the electronic device in the open position in accordance with the first particular embodiment of the present invention;
Fig. 5 is a schematic top view of the lower slider portion of the electronic device in accordance with the first particular embodiment of the present invention;
Fig. 6 is a schematic cross section in relevant part of the electronic device taken along lines VI-IV in Fig. 5 in accordance with the first particular embodiment of the present invention;
Fig. 7 is a measured VSWR plot of the antenna in the electronic device in accordance with the first particular embodiment of the present invention;
Fig. 8 is a measured Smith chart plot of the antenna in the electronic device in accordance with the first particular embodiment of the present invention;
Fig. 9 is a schematic side view of the electronic device in the closed position in accordance with a second particular embodiment of the present invention;
Fig. 10 is a schematic side view of the electronic device in the open position in accordance with the second particular embodiment of the present invention;
Fig. 11 is a schematic bottom view of the lower slider portion of the electronic device in accordance with the second particular embodiment of the present invention;
Fig. 12 is a simulated plot showing return loss for the antenna in the electronic device in accordance with the second particular embodiment of the present invention;
Fig. 13 is a simulated plot showing antenna and radiation efficiencies for the antenna in the electronic device in accordance with the second particular embodiment of the present invention;
Fig. 14 is a measured VSWR plot of the antenna in the electronic device in accordance with the second particular embodiment of the present invention; and
Fig. 15 is a measured Smith chart plot of the antenna in the electronic device in accordance with the second particular embodiment of the present invention.

### DETAILED DESCRIPTION OF EMBODIMENTS

The present invention will now be described with reference to the figures, wherein like reference numerals are used to refer to like elements throughout.

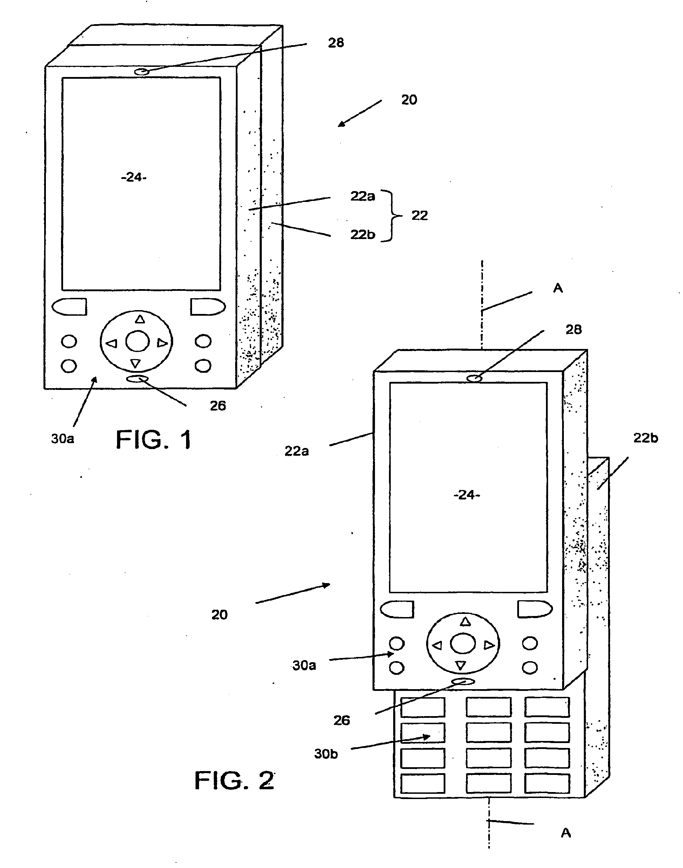

Referring initially to Figs. 1 and 2, an electronic device 20 is shown in accordance with an exemplary embodiment of the present invention. In the exemplary embodiment, the electronic device 20 is a mobile phone for carrying out mobile communications including voice communications, etc. However, it will be appreciated that the electronic device 20 may be any type of portable device having an antenna for engaging in radio communications. The particular type of electronic device is not germane to the present invention in its broadest sense.

As is shown in Figs. 1 and 2, the electronic device 20 has a slider form factor. Specifically, the electronic device includes a housing 22 that includes an upper slider portion 22a and a lower slider portion 22b. The upper portion 22a is slidably engaged with the lower portion 22b so as to allow for the upper portion 22a to slide relative to the lower portion 22b along a sliding axis A (Fig. 2). Fig. 1 illustrates the electronic device 20 in the "closed" position, whereas Fig. 2 illustrates the electronic device 20 in the "open" position.

The slider form factor is popular in that the electronic device 20 maintains a relatively small profile while in the closed position as shown in Fig. 1. On the other hand, when in the open position of Fig. 2, the electronic device 20 provides an additional exposed surface area providing for additional function keys, etc.

In the exemplary embodiment, the mobile phone 20 includes a liquid crystal display 24 serving as a graphical user interface (GUI). The display 24 is housed within the upper housing portion 22a and provides a display of various types of information as is conventional. For example, the display 24 may display the operational status of the phone 20, contact information, menu information, text, graphics, videos, etc. In addition, in the case where the display 24 is a touch sensitive display, the display 24 may serve as an input device to allow the user to input data, menu selections, etc.

The mobile phone 20 further includes a microphone 26 and a speaker 28 for allowing a user to carry out conventional voice communications by placing the housing 22 adjacent the user's ear. In addition, the mobile phone 20 includes a keypad 30a in the upper slider portion 22a having an assortment of keys. The keypad 30a facilitates user input and operation of the mobile phone 20 as is conventional. For example, the keypad 30a may include keys for navigating the menus displayed on the display 24, selecting predefined functions, initiating or terminating a call, etc.

As shown in Fig. 2, the mobile phone 20 additionally includes a keypad 30b within the lower slider portion 22b. The keypad 30b may include a further assortment of keys that facilitate user input and operation of the mobile phone 20. Notably, though, the keypad 30b is provided on the surface of the lower slider portion 22b exposed only when the mobile phone 20 is in the "open" position as represented in Fig. 2. Thus, a user desiring access to the keypad 30b must open the mobile phone 20 by sliding the upper slider portion 22a upwards along axis A relative to the lower slider portion 22b as represented in Fig. 2. The keypad 30b typically includes keys whose functions are less frequently utilized than those of the keys included in the keypad 30a. For example, the keypad 30b may include keys representing the individual number keys for use in manual dialing of telephone numbers.

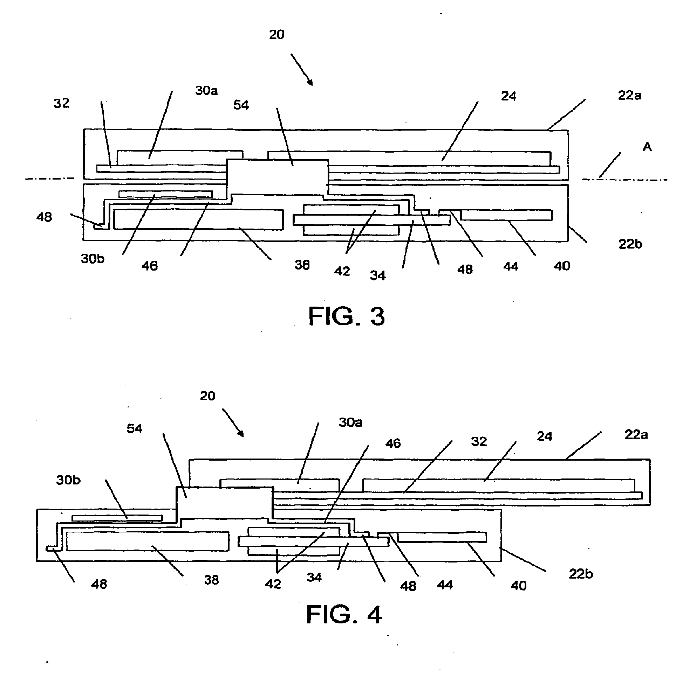

Figs. 3 and 4 represent schematic side views of the mobile phone 20 in the open and closed position, respectively, in accordance with a first particular embodiment of the present invention. The upper slider portion 22a houses a printed circuit board (PCB) 32 that includes the display 24 and keypad 30a assembled thereon. In the present example, the PCB 32 is a single-sided PCB having circuitry mounted on the upper side as shown in Figs. 3 and 4. The back or lower side surface of the PCB 32 is covered by a ground plane layer of copper or other electrically conductive material, as is known. In the case of a multilayered PCB 32, the ground plane layer may be an internal layer of the PCB 32 as will be appreciated. The ground plane layer serves as a common ground to the circuitry on the upper or front side of the PCB 32. As is seen in Figs. 3 and 4, the PCB 32 occupies the majority of the length of the upper slider portion 22a.

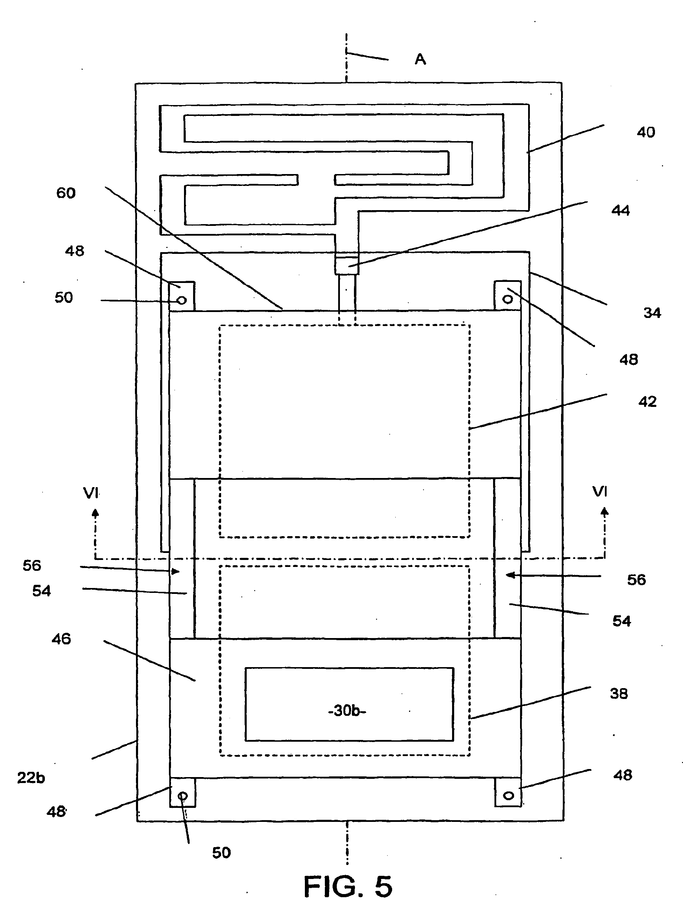

The lower slider portion 22b houses its own PCB 34 together with a battery 38 and antenna 40 positioned adjacent each other along the length of the lower slider portion 22b (i.e., along the sliding axis A). The battery 38 preferably is rechargeable and provides operating power to the mobile phone 20 as is conventional. The PCB 34 in the present embodiment is a double-sided PCB having circuitry 42 assembled on both sides of the PCB. The circuitry 42 includes at least one of a radio receiver or a radio transmitter, and in the case where the electronic device 20 is a mobile phone, includes a radio transceiver. The radio transceiver is connected to the antenna 40 by a centrally located antenna feed port 44 discussed in more detail below with respect to Fig. 5. In the exemplary embodiment, the antenna 40 is a bent monopole antenna, although it will be appreciated that the antenna 40 may take another form without departing from the scope of the invention in its broadest sense.

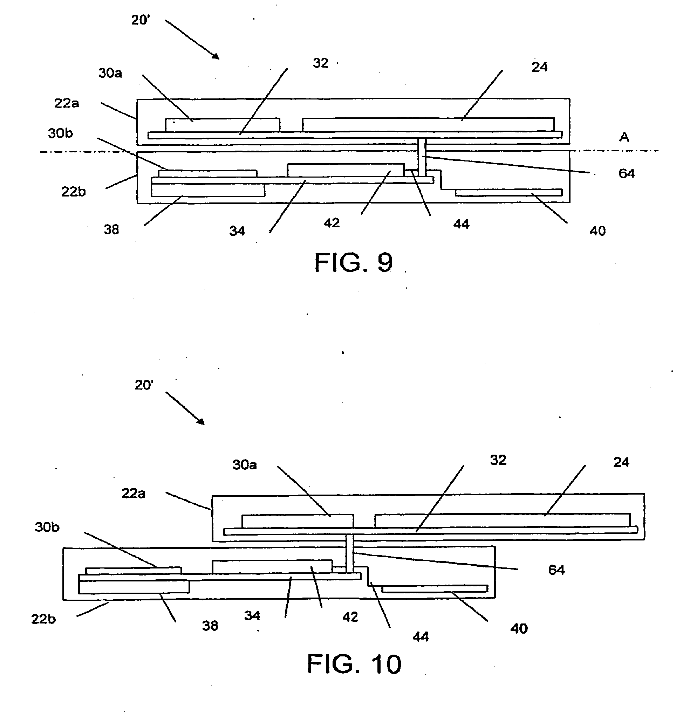

The embodiment of Figs. 3 and 4 presents an ultra-slim slider form factor for the electronic device 20. By using a double-sided PCB 34, it is possible to provide any circuitry 42 on a PCB 34 that occupies less than one-half the length of the lower slider portion 22b along the sliding axis A. This allows the battery 38 of suitable size and charge capacity to be positioned within the lower slider portion 22b adjacent the PCB 34 rather than on top of the PCB 34 (as in the embodiment discussed below in association with Figs. 9-11). The antenna 40 occupies the majority of the remainder of the length of the lower slider portion 22b. Consequently, the electronic device has a reduced thickness as is desirable with consumers.

In a conventional slider form factor mobile phone 20 having a full size single-sided PCB 34, a ground plane is provided by a copper or other electrically conductive metal layer provided on the back or lower side surface of the PCB 34 (discussed below in connection with the embodiment of Figs. 9-11). Such a ground plane in the lower slider portion 22b is preferable in that the ground plane enhances the low band performance of the antenna 40 (e.g., in the 850 MHz and 900 MHz bands).

In the absence of such a ground plane provided on the PCB 34, the present invention instead utilizes an electrically conductive thin metal sheet 46 included in the lower slider portion as shown in Figs. 3 and 4. The metal sheet 46 functions as a ground plane interposed between the battery 38 and PCB 34 of the lower slider portion 22b and the PCB 32 of the upper slider portion 22a. As is shown in Fig. 5, the ground plane 46 substantially covers the PCB 34 and battery 38. The ground plane 46 is mounted to the PCB 34 at tabs 48 preferably with screws 50. One or both of the tabs 48 and screws 50 serve to electrically connect the ground plane 46 to electrical ground of the PCB 34. The opposite end of the ground plane 46 is connected to the lower slider portion 22b via tabs 48 and screws 50, for example.

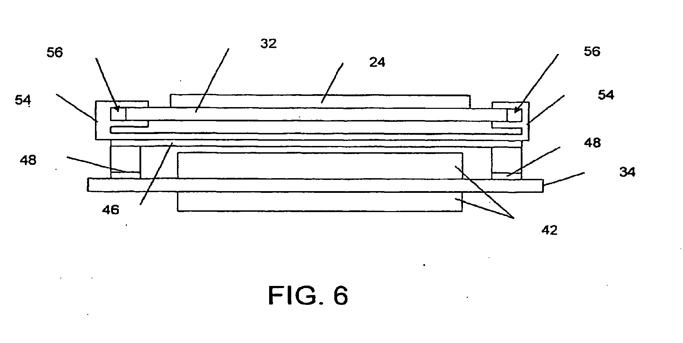

Referring back to Figs 3 and 4, the ground plane 46 includes two ears 54. The ears 54 each extends upwards towards and into the upper slider portion 22a respectively from the side of the ground plane 46. As is best shown in Fig. 6, each of the ears 54 has a channel 56 formed therein. The channels 56 are designed so as to slidably engage the respective sides of the PCB 32 in the upper slider portion 22a. In other words, the channels 56 permit the upper slider portion 22a to move relative to the lower slider portion 22b along the sliding axis A by allowing the PCB 32 to slide therethrough.

In accordance with one particular aspect of the invention, the sliding contact provided between the PCB 32 and one of the channels 56 (e.g., either the channel 56 on the left or the channel 56 on the right in Fig. 6) provides an electrical connection between the ground plane 46 and the ground plane of the upper slider portion formed of an electrically conductive layer on the lower surface of the PCB 32. In the preferred embodiment of the invention, the electrical connection between the ground plane 46 and the ground plane of the upper slider portion occurs only at one of the channels 56 formed at the edge of the ground plane 46. The reason is the inventors have found the low band performance of the antenna 40 to be better than if an electrical connection was provided between the ground plane 46 and the ground plane of the upper slider portion at both channels 56. The electrical connection between the one channel 56 and the surface of the PCB 32 is provided most easily by allowing the conductive layer on the PCB 32 to exist all the way to the leftmost or rightmost edge of the PCB 32 as represented in Fig. 6. One may provide the lack of an electrical connection at the other channel 56 most easily simply by removing or never forming the conductive layer of the PCB 32 at the other of the leftmost edge or rightmost edge of the PCB 32.

Alternatively, in another embodiment of the invention the electrical connection between the ground plane 46 and the ground plane of the upper slider portion need not be provided by the channel mechanism that provides the slidable engagement. Instead, an electrically conductive post with a slidable contact button may serve to extend between the ground plane 46 and the ground plane of the upper slider portion along one of the same edges as the channels 56, for example.

Referring back to Fig. 5, it is noted that an antenna 40 housed within the lower slider portion 22b is positioned generally laterally adjacent an edge 60 of the ground plane 46. The antenna feed point 44 coupling the radio transceiver included in the circuitry 42 to the antenna 40 is located generally at the center of the edge 60 of the lower ground plane 46 (e.g., approximately equidistant between the edges including the respective channels 56. The ground connection electrically connecting the ground plane 46 to the ground plane of the upper slider portion is, at the same time, formed at one of the edges of the ground plane 46 adjacent the edge 60 (i.e., one of the edges including a channel 56 or alternate means for connection).

By virtue of the antenna feed point 44 being located generally at the center of the of the edge of the lower ground plane (i.e., closer to the center than an edge), in combination with the ground connection being formed at one of the edges, the inventors have found that the antenna provides superior wideband performance even in an ultra slim form factor. The low band resonance is affected the most by the configuration described herein because it is largely dependent on length of the ground plane and the way currents flow in the structure. Hence, with only one side grounded between the upper and lower ground planes and the antenna 40 fed from the center, the currents flow through the ground planes of the upper and lower slider portions creating the optimum low band resonance (and hence good antenna efficiency and low mismatch).

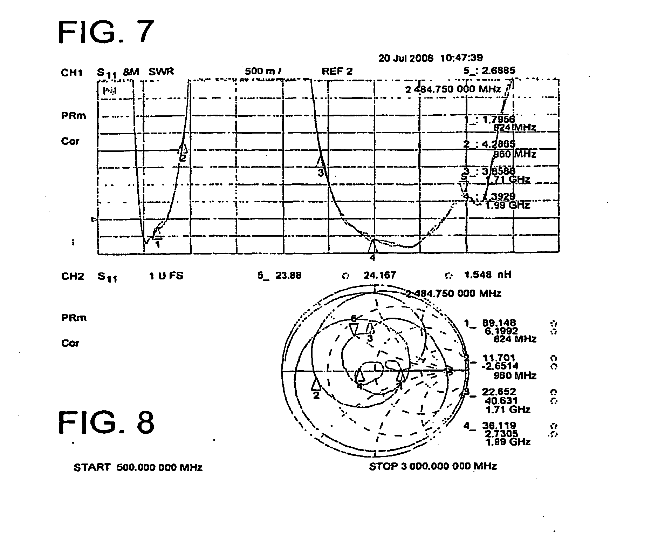

For example, Figs. 7 and 8 are VSWR and Smith chart plots illustrating both low and high band resonance for the antenna in the embodiment of Figs. 3-6. It is noted that suitable performance is provided both at the low bands (e.g., at 824 MHz and 960 MHz), as well as at the higher bands (e.g., 1710 MHz, 1990 MHz and 2688 MHz.). Thus, the antenna 40 in accordance with the present invention is suitable for even penta-band performance.

Turning now to Figs. 9-11, another embodiment of a mobile phone in accordance with the present invention is designated 20'. As most of the components included in the mobile phone 20' are the same as those described above in connection with the embodiment of Figs. 2-6, for sake of brevity only the significant differences will be discussed herein.

Referring initially to Figs. 9 and 10, the primary difference between the mobile phone 20' and the mobile phone 20 is that the mobile phone 20' includes a full size, single-sided PCB 34. By full size, it is meant that the PCB 34 occupies more than half of the length of the lower slider portion 22b in the direction along the sliding axis A. Thus, the battery 38 sits on top of the PCB 34, and the antenna 40 occupies the majority of the remaining length of the lower slider portion. Circuitry 42 is assembled on only one side of the PCB 34, and thus the lower or rear face surface of the PCB 34 may include a copper or other electrically conductive layer so as to form the ground plane of the lower slider portion 22b. In the case of a multilayered PCB 34, the ground plane layer may be an internal layer of the PCB 34 as will be appreciated. Thus, the ground plane 46 is omitted from this embodiment.

In addition, the mobile phone 20' differs from the previous embodiment in that a means other than the channels 56 is utilized to provide the slidable engagement between the upper slider portion 22a and the lower slider portion 22b. Although not shown in Figs. 9-11, such means for providing slidable engagement may be any type of means conventionally used in a slider form factor. For example, a slidable rail engagement may be utilized such as is described in US Patent No. 7,012,571. Alternatively, any other known means may be used.

Because the ground plane 46 has been omitted in this embodiment, another means for providing the ground connection between the ground plane of the lower slider portion 22b and the ground plane of the upper slider portion 22a is provided. For example, an electrically conductive post 64 is positioned at one of the edges of the ground plane formed by the PCB 34. The post 64 is connected to the ground plane of the PCB 34 and extends towards the upper slider portion. The distal end of the post 64 includes a slider button contact that engages the ground plane of the upper slider portion via the ground plane on the lower or rear face surface of the PCB 32. The slider button may be spring loaded to provide a secure electrical connection between the respective ground planes as the upper and lower slider portions slide relative to one another.

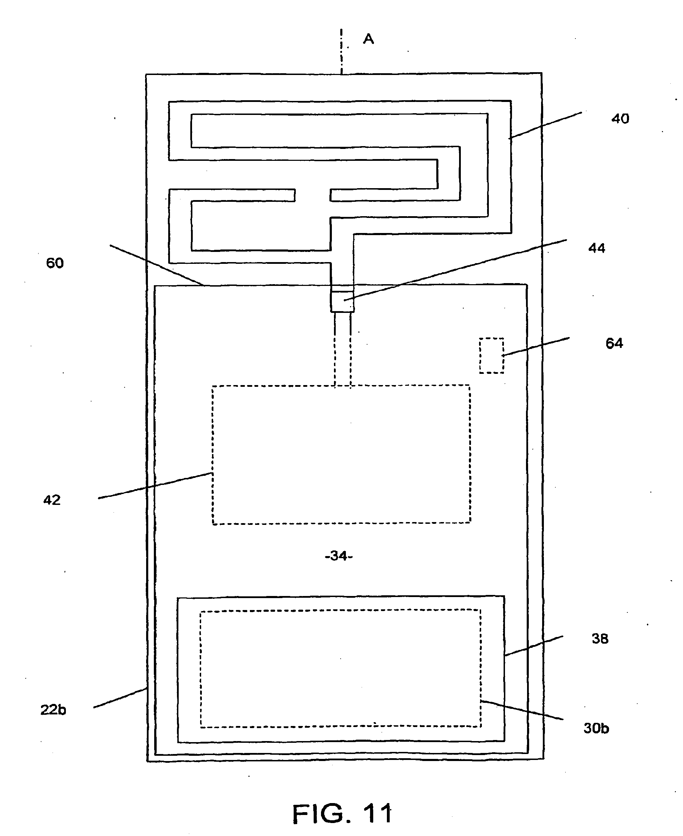

Referring to Fig. 11, again it is noted that the antenna 40 housed within the lower slider portion 22b is positioned generally laterally adjacent an edge 60 of the ground plane, in this case the ground plane formed on the lower surface of the PCB 34. Again, the antenna feed point 44 coupling the radio transceiver included in the circuitry 42 to the antenna 40 is located generally at the center of the edge 60 of the lower ground plane (e.g., approximately equidistant between the edges adjacent the edge 60). The ground connection 64 electrically connecting the lower slider portion ground plane to the upper slider portion ground plane of the upper slider portion is again, at the same time, formed at one of the edges of the ground plane adjacent the edge 60.

Therefore, again by virtue of the antenna feed point 44 being located near the center of the of the edge of the lower ground plane (i.e., closer to the center than an edge), in combination with the ground connection formed at one of the edges, the inventors have found that the antenna provides superior wideband performance even in an ultra slim form factor. The low band resonance is affected the most by the configuration described herein because it is largely dependent on length of the ground plane and the way currents flow in the structure. Hence, with only one side grounded between the upper and lower ground planes and the antenna 40 fed from the center, the currents flow through the ground planes of the upper and lower slider portions creating the optimum low band resonance (and hence good antenna efficiency and low mismatch).

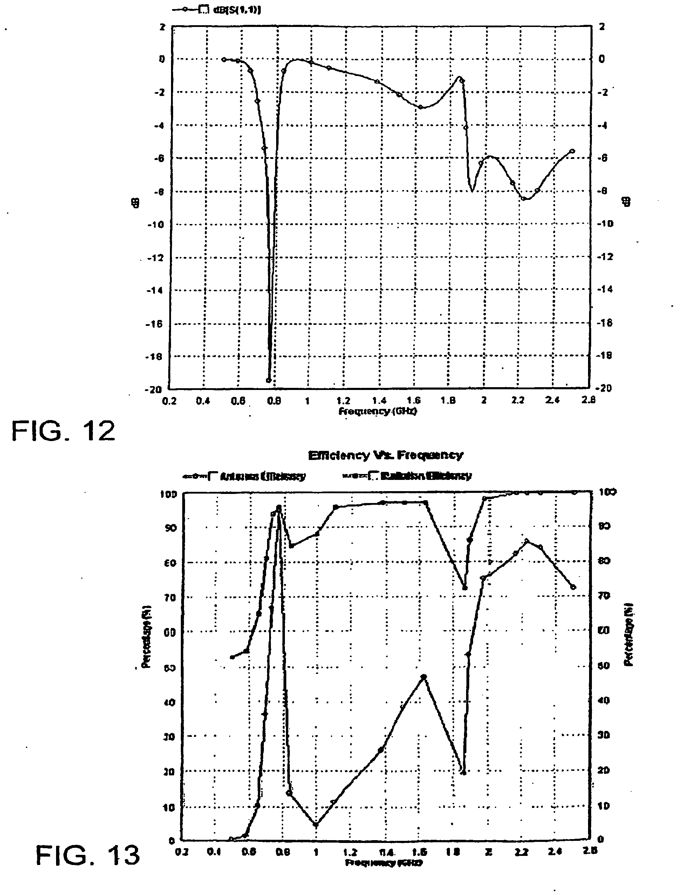

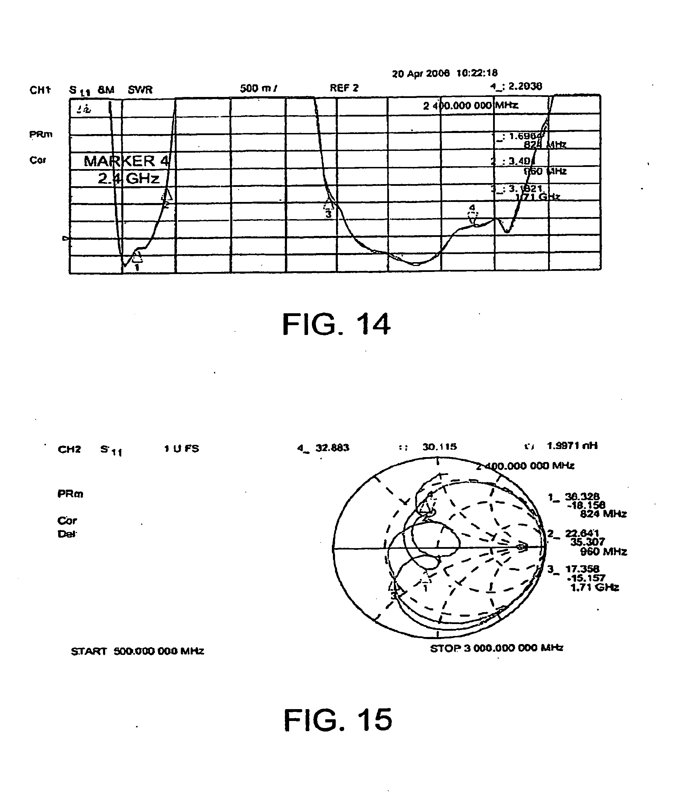

For example, Figs. 12-15 illustrate return loss (Fig. 12), antenna and radiation efficiencies (Fig. 13), VSWR plot (Fig. 14) and Smith Chart (Fig. 15) for the antenna 40 in accordance with the embodiment of ' Figs. 9-11. As is shown, the antenna 40 is capable of greater than 50% efficiency at approximately 850 MHz. Moreover, the antenna 40 provides greater than 50% radiation efficiency at the 850, 900, 1800, 1900 and 2100 MHz bands. Again, then, the antenna configuration of the present invention provides excellent wideband response and offers good performance in at least five different bands used by mobile phones.

In view of the above, it will be appreciated that the present invention provides an electronic device having an antenna configuration with both small size and good low band performance.

The term "electronic device" as referred to herein includes portable radio communication equipment. The term "portable radio communication equipment", also referred to herein as a "mobile radio terminal", includes all equipment such as mobile phones, pagers, communicators, e.g., electronic organizers, personal digital assistants (PDAs), smartphones or the like.

Although the invention has been shown and described with respect to certain preferred embodiments, it is obvious that equivalents and modifications will occur to others skilled in the art upon the reading and understanding of the specification. For example, the above exemplary embodiments describe the upper ground plane as part of the upper PCB 32. It will be appreciated, however, that an alternate embodiment of the invention may include an upper ground plane physically discrete from the upper PCB 32 and formed, for example, of a thin metal sheet similar to the ground plane 46 in the embodiment of Figs. 3-6. As utilized herein, reference to "an upper printed circuit board and upper ground plane" refers to both an upper ground plane that is one of the layers of the upper printed circuit board, and an upper ground plane that is separate from the upper printed circuit board.

The present invention includes all such equivalents and modifications, and is limited only by the scope of the following claims.

## Claims

1. An electronic device, comprising:
a housing including an upper slider portion (22a) and a lower slider portion (22b), the upper slider portion (22a) and the lower slider portion (22b) being slidably engaged to permit relative sliding motion therebetween along a sliding axis;
an upper printed circuit board (32) and upper ground plane housed within the upper slider portion, the upper printed circuit board (32) having circuitry assembled thereon;
a lower printed circuit board (34) and lower ground plane housed within the lower slider portion, the lower printed circuit board (34) having additional circuitry assembled thereon;
at least one of a radio transmitter or receiver (42) within the housing for transmitting/receiving communications via the electronic device;
an antenna (40) housed within the lower slider portion (22b) laterally outside of and adjacent a first edge of the lower ground plane;
an antenna feed point (44) coupling the at least one of the radio transmitter or receiver (42) to the antenna (40) at a location at the center of the first edge of the lower ground plane; and
a ground connection (54, 56, 64) electrically connecting a second edge of the lower ground plane, adjacent the first edge, to an edge of the upper ground plane.

2. The electronic device of claim 1, wherein the lower ground plane comprises an electrically conductive sheet (46) interposed between the lower printed circuit board (34) and the upper printed circuit board (32).

3. The electronic device of claim 2, wherein the electrically conductive sheet (46) comprises a pair of guide channels (56) that engage opposite edges of the upper printed circuit board (32) to provide the slidable engagement.

4. The electronic device of claim 3, wherein one of the pair of guide channels (56) serves as the ground connection.

5. The electronic device of claim 4, wherein the upper ground plane comprises a metal layer of the upper printed circuit board.

6. The electronic device of claim 3, wherein the ground connection comprises a slider button contact (64) extending from the lower slider portion and engaging the upper ground plane in the upper slider portion.

7. The electronic device of claim 1, wherein the lower printed circuit board (34) occupies less than one-half a length of the lower slider portion along the sliding axis, and further comprising an electrically conductive sheet (46) interposed between the lower printed circuit board (34) and the upper printed circuit board (32), the electrically conductive sheet (40) occupying more than half the length of the lower slider portion along the sliding axis.

8. The electronic device of claim 7, wherein the antenna (40) occupies a majority of a remainder of the length of the lower slider portion along the sliding axis not occupied by the electrically conductive sheet (46).

9. The electronic device of claim 1, wherein the upper ground plane comprises a metal layer of the upper printed circuit board.

10. The electronic device of claim 1, wherein the lower printed circuit board (34) occupies at least half a length of the lower slider portion along the sliding axis, and the lower ground plane comprises a metal layer of the lower printed circuit boarn (34).

11. The electronic device of claim 10, wherein the upper ground plane comprises a metal layer of the upper printed circuit board.

12. The electronic device of claim 11, wherein the ground connection comprises a slider button contact (64). extending from the lower slider portion and engaging the upper ground plane in the upper slider portion.

13. The electronic device of claim 10 wherein the antenna (40) occupies a majority of a remainder of the length of the lower slider portion along the sliding axis not occupied by the lower printed circuit board.

14. The electronic device of claim 1, wherein the antenna comprises a bent monopole antenna.

15. The etectronic device of claim 1, wherein the at least one of the radio transmitter or receiver comprises a mobile phone transceiver and the electronic device functions as a mobile phone.

## Patentansprüche

1. Elektronisches Gerät, welches aufweist:
ein Gehäuse mit einem oberen Schiebeteil (22a) und einem unteren Schiebeteil (22b), wobei das obere Schiebeteil (22a) und das untere Schiebeteil (22b) verschiebbar miteinander verbunden sind, um relativ gegeneinander entlang einer Schiebeachse verschoben werden zu können;
eine obere Leiterplatte (32) und eine obere Masseebene, welche im oberen Schiebeteil untergebracht sind, wobei auf der oberen Leiterplatte (32) Schaltungen angeordnet sind;
eine untere Leiterplatte (34) und eine untere Masseebene, welche im unteren Schiebeteil untergebracht sind, wobei auf der unteren Leiterplatte (32) zusätzliche Schaltungen angeordnet sind;
mindestens einen Funksender oder Funkempfänger (42) innerhalb des Gehäuses zum Übertragen/Empfangen von Kommunikation über das elektronische Gerät;
eine Antenne (40), welche im unteren Schiebeteil (22b) seitlich außen und angrenzend an einen ersten Rand der unteren Masseebene untergebracht ist;
einen Antennenspeisepunkt (44), welcher den mindestens einen Funksender oder Funkempfänger (42) mit der Antenne (40) koppelt und in der Mitte des ersten Rands der unteren Masseebene angeordnet ist; und
eine Masseverbindung (54, 56, 64), welche einen zweiten Rand der unteren Masseebene angrenzend am ersten Rand elektrisch mit einem Rand der oberen Masseebene verbindet.

2. Elektronisches Gerät nach Anspruch 1, wobei die untere Masseebene ein zwischen der unteren Leiterplatte (34) und der oberen Leiterplatte (32) angeordnetes elektrisch leitendes Blech (46) aufweist.

3. Elektronisches Gerät nach Anspruch 2, wobei das elektrisch leitende Blech (46) ein Paar von Führungskanälen (56) aufweist, welche in gegenüberliegende Ränder der oberen Leiterplatte (32) verschiebbar eingreifen, um die verschiebbare Verbindung zu ermöglichen.

4. Elektronisches Gerät nach Anspruch 3, wobei ein Paar von Führungskanälen (56) als Masseverbindung dient.

5. Elektronisches Gerät nach Anspruch 4, wobei die obere Masseebene eine Metallschicht der oberen Leiterplatte enthält.

6. Elektronisches Gerät nach Anspruch 3, wobei die Masseverbindung einen Schiebekontaktstift (64) aufweist, der vom unteren Schiebeteil wegragt und in die obere Masseebene im oberen Schiebeteil eingreift.

7. Elektronisches Gerät nach Anspruch 1, wobei die untere Leiterplatte (34) weniger als die Hälfte einer Länge des unteren Schiebeteils entlang der Schiebeachse belegt und weiterhin ein zwischen der unteren Leiterplatte (34) und der oberen Leiterplatte (32) angeordnetes elektrisch leitendes Blech (46) aufweist, welches mehr als die Hälfte der Länge des unteren Schiebeteils entlang der Schiebeachse belegt.

8. Elektronisches Gerät nach Anspruch 7, wobei die Antenne (40) fast die gesamte restliche, nicht vom elektrisch leitenden Blech (46) belegte Länge des unteren Schiebeteils entlang der Schiebeachse belegt.

9. Elektronisches Gerät nach Anspruch 1, wobei die obere Masseebene eine Metallschicht der oberen Leiterplatte enthält.

10. Elektronisches Gerät nach Anspruch 1, wobei die untere Leiterplatte (34) mindestens die Hälfte einer Länge des unteren Schiebeteils entlang der Schiebeachse belegt und die untere Masseebene eine Metallschicht der unteren Leiterplatte (34) enthält.

11. Elektronisches Gerät nach Anspruch 10, wobei die obere Masseebene eine Metallschicht der oberen Leiterplatte enthält.

12. Elektronisches Gerät nach Anspruch 11, wobei die Masseverbindung einen Schiebekontaktstift (64) aufweist, der sich vom unteren Schiebeteil wegragt und in die obere Masseebene im oberen Schiebeteil eingreift.

13. Elektronisches Gerät nach Anspruch 10, wobei die Antenne (40) fast die gesamte restliche, nicht von der unteren Leiterplatte belegte Länge des unteren Schiebeteils entlang der Schiebeachse belegt.

14. Elektronisches Gerät nach Anspruch 1, wobei die Antenne eine gebogene Monopolantenne ist.

15. Elektronisches Gerät nach Anspruch 1, wobei der mindestens eine Funksender oder Funkempfänger eine Mobiltelefon-Sende-Empfangseinrichtung aufweist und das elektronische Gerät als Mobiltelefon funktioniert.

## Revendications

1. Dispositif électronique, comprenant :
un boîtier comprenant une partie de coulissement supérieure (22a) et une partie de coulissement inférieure (22b), la partie de coulissement supérieure (22a) et la partie de coulissement inférieure (22b) venant en prise par coulissement de façon à permettre un mouvement de coulissement relatif entre celles-ci le long d'un axe de coulissement ;
une carte de circuits imprimés supérieure (32) et un plan de masse supérieur renfermés à l'intérieur de la partie de coulissement supérieure, la carte de circuits imprimés supérieure (32) comportant des circuits assemblés sur celle-ci ;
une carte de circuits imprimés inférieure (34) et un plan de masse inférieur renfermés à l'intérieur de la partie de coulissement inférieure, la carte de circuits imprimés inférieure (34) comportant des circuits additionnels assemblés sur celle-ci ;
au moins l'un parmi un émetteur ou un récepteur de radio (42) à l'intérieur du boîtier pour émettre/recevoir des communications par l'intermédiaire du dispositif électronique ;
une antenne (40) renfermée à l'intérieur de la partie de coulissement inférieure (22b) latéralement à l'extérieur d'un premier bord du plan de masse inférieur et au voisinage de celui-ci ;
un point d'alimentation d'antenne (44) couplant le dispositif au nombre d'au moins un parmi l'émetteur ou le récepteur de radio (42) à l'antenne (40) en un emplacement au centre du premier bord du plan de masse inférieur ; et
une connexion de masse (54, 56, 64) connectant électriquement un deuxième bord du plan de masse inférieur, au voisinage du premier bord, à un bord du plan de masse supérieur.

2. Dispositif électronique selon la revendication 1, dans lequel le plan de masse inférieur comprend une feuille électriquement conductrice (46) interposée entre la carte de circuits imprimés inférieure (34) et la carte de circuits imprimés supérieure (32).

3. Dispositif électronique selon la revendication 2, dans lequel la feuille électriquement conductrice (46) comprend une paire de canaux de guidage (56) qui viennent en prise avec des bords opposés de la carte de circuits imprimés supérieure (32) de façon à produire la prise de coulissement.

4. Dispositif électronique selon la revendication 3, dans lequel l'un de la paire de canaux de guidage (56) joue le rôle de connexion de masse.

5. Dispositif électronique selon la revendication 4, dans lequel le plan de masse supérieur comprend une couche métallique de la carte de circuits imprimés supérieure.

6. Dispositif électronique selon la revendication 3, dans lequel la connexion de masse comprend un contact de bouton de coulissement (64) s'étendant à partir de la partie de coulissement inférieure et venant en prise avec le plan de masse supérieur dans la partie de coulissement supérieure.

7. Dispositif électronique selon la revendication 1, dans lequel la carte de circuits imprimés inférieure (34) occupe moins de la moitié de la longueur de la partie de coulissement inférieure le long de l'axe de coulissement, et comprenant de plus une feuille électriquement conductrice (46) interposée entre la carte de circuits imprimés inférieure (34) et la carte de circuits imprimés supérieure (32), la feuille électriquement conductrice (46) occupant plus de la moitié de la longueur de la partie de coulissement inférieure le long de l'axe de coulissement.

8. Dispositif électronique selon la revendication 7, dans lequel l'antenne (40) occupe la majorité du reste de la longueur de la partie de coulissement inférieure le long de l'axe de coulissement non occupée par la feuille électriquement conductrice (46).

9. Dispositif électronique selon la revendication 1, dans lequel le plan de masse supérieur comprend une couche métallique de la carte de circuits imprimés supérieure.

10. Dispositif électronique selon la revendication 1, dans lequel la carte de circuits imprimés inférieure (34) occupe au moins la moitié de la longueur de la partie de coulissement inférieure le long de l'axe de coulissement, et le plan de masse inférieur comprend une couche métallique de la carte de circuits imprimés inférieure (34).

11. Dispositif électronique selon la revendication 10, dans lequel le plan de masse supérieur comprend une couche métallique de la carte de circuits imprimés supérieure.

12. Dispositif électronique selon la revendication 11, dans lequel la connexion de masse comprend un contact de bouton de coulissement (64) s'étendant à partir de la partie de coulissement inférieure et venant en prise avec le plan de masse supérieur dans la partie de coulissement supérieure.

13. Dispositif électronique selon la revendication 10, dans lequel l'antenne (40) occupe la majorité du reste de la longueur de la partie de coulissement inférieure le long de l'axe de coulissement non occupée par la carte de circuits imprimés inférieure.

14. Dispositif électronique selon la revendication 1, dans lequel l'antenne comprend une antenne monopôle courbée.

15. Dispositif électronique selon la revendication 1, dans lequel le dispositif au nombre d'au moins un parmi l'émetteur ou le récepteur de radio comprend un émetteur-récepteur de téléphone mobile et le dispositif électronique fonctionne comme un téléphone mobile.
